# EUROPEAN PATENT APPLICATION

(11) **EP 4 791 108 A1**
(43) Date of publication of application: **12.08.2026**
(21) Application number: 24874591.1
(22) Date of filing: 01.10.2024
(51) Int. Cl.: H04W 74/0833, H04W 48/10, H04W 72/231, H04W 72/232, H04W 72/56

(54) **COMMUNICATION DEVICE, BASE STATION, AND COMMUNICATION METHOD**

(30) Priority: 06.10.2023 JP 2023174676
(71) Applicant: DENSO CORPORATION, Kariya-city, Aichi 448-8661 (JP)
(72) Inventor: FURUYAMA, Takahiro, Kariya-city, Aichi 448-8661 (JP)
(74) Representative: TBK
(86) International application number: PCT/JP2024/035063
(87) International publication number: WO 2025/074989

(57) **Abstract**

A communication apparatus (100) according to an embodiment comprises: a receiver (112) configured to receive, from a base station (200), both of updated system information that indicates a modification in a duration of a physical random access channel (PRACH) occasion and control information that indicates the modification in the duration of the PRACH occasion and is carried by signaling of a lower layer than a radio resource control (RRC) layer; and a controller (120) configured to prioritize one of the updated system information and the control information in accordance with priority information received from the base station or a predefined rule and to modify the duration of the PRACH based on the prioritized information.

## Description

### Cross-Reference to Related Application

This application is based on and claims the benefit of priority from Japanese Patent Application No. 2023-174676, filed on October 6, 2023, the entire contents of which are incorporated herein by reference.

### Technical Field

The present disclosure relates to a communication apparatus, a base station, and a communication method.

### Background Art

In the third generation partnership project (3GPP (registered trademark, the same shall apply hereinafter)), which is a standardization project of a mobile communication system, network energy saving (NES) has been discussed. As one method of NES, dynamic adaptation of dynamically modifying a duration of a physical random access channel (PRACH) occasion (hereinafter, PRACH period) has been proposed (for example, refer to Non Patent Literature 1).

In the dynamic adaptation of PRACH occasions, for example, by modifying a PRACH period using downlink control information (DCI), the PRACH period can be modified at a shorter time interval, for example, as compared to a case where a PRACH period is modified by updating a system information block. As a result, the energy of a network can be saved.

### Citation List

### Non Patent Literature

Non Patent Literature 1: "RWS-230156" (On NW Energy Savings for Rel-19)

### Summary of Invention

A communication apparatus according to a first aspect comprises: a receiver (112) configured to receive, from a base station, both of updated system information that indicates a modification in a duration of a physical random access channel (PRACH) occasion and control information that indicates the modification in the duration of the PRACH occasion and is carried by signaling of a lower layer than a radio resource control (RRC) layer; and a controller configured to prioritize one of the updated system information and the control information in accordance with priority information received from the base station or a predefined rule and to modify the duration of the PRACH based on the prioritized information.

A base station according to a second aspect comprises: a transmitter configured to transmit, to a communication apparatus, both of updated system information that modifies a duration of a physical random access channel (PRACH) occasion and control information that modifies the duration of the PRACH occasion and is carried by signaling of a lower layer than a radio resource control (RRC) layer. The transmitter is configured to transmit, to the communication apparatus, priority information for causing the communication apparatus to determine whether to prioritize the updated system information or the control information.

A communication method is performed by a communication apparatus. The method comprises the steps of: receiving, from a base station, both of updated system information that indicates a modification in a duration of a physical random access channel (PRACH) occasion and control information that indicates the modification in the duration of the PRACH occasion and is carried by signaling of a lower layer than a radio resource control (RRC) layer; and prioritizing one of the updated system information and the control information in accordance with priority information received from the base station or a predefined rule and modifying the duration of the PRACH based on the prioritized information.

### Brief Description of Drawings

Objects, features, advantages, and the like of the present disclosure will become more apparent from the following detailed description with reference to the accompanying drawings.
Fig. 1 is a diagram illustrating a configuration of a mobile communication system according to an embodiment.
Fig. 2 is a diagram illustrating a configuration example of a protocol stack according to the embodiment.

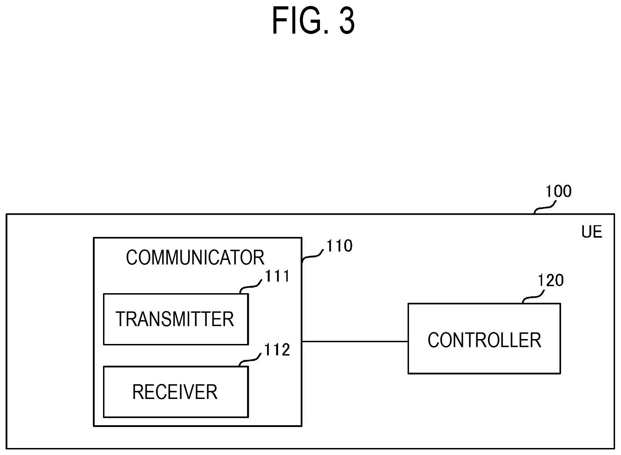

Fig. 3 is a diagram illustrating a configuration of a UE according to the embodiment.
Fig. 4 is a diagram illustrating a configuration of a base station according to the embodiment.
Fig. 5 is a sequence diagram illustrating a first operation example according to the embodiment.
Fig. 6 is a flowchart illustrating the first operation example according to the embodiment.
Fig. 7 is a diagram (part 1) illustrating the first operation example according to the embodiment.
Fig. 8 is a diagram (part 2) illustrating the first operation example according to the embodiment.
Fig. 9 is a diagram (part 3) illustrating the first operation example according to the embodiment.
Fig. 10 is a sequence diagram illustrating a second operation example according to the embodiment.
Fig. 11 is a diagram illustrating the second operation example according to the embodiment.

### Description of Embodiments

A mobile communication system according to an embodiment will be described with reference to the drawings. In the description of the drawings, the same or similar parts are denoted by the same or similar reference numerals.

However, a specific operation related to dynamic adaptation of PRACH occasions is not defined. Accordingly, there is a concern that a communication apparatus cannot appropriately perform dynamic adaptation of PRACH occasions.

Therefore, an object of the present disclosure is to provide a communication apparatus, a base station, and a communication method capable of appropriately performing dynamic adaptation of PRACH occasions.

### (System Configuration)

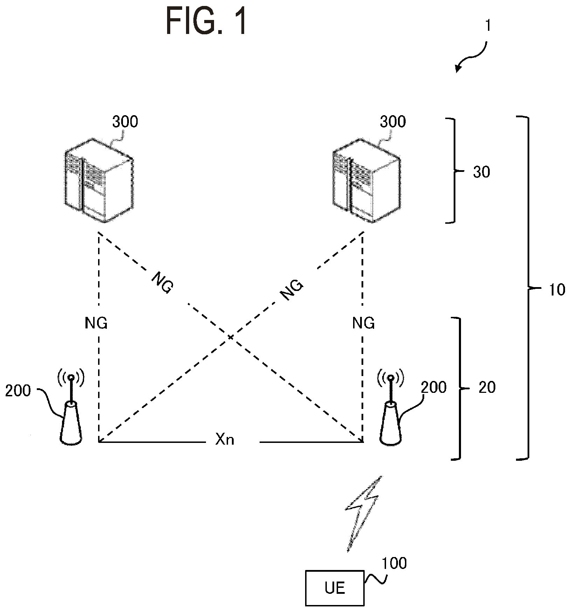

First, a configuration of a mobile communication system 1 according to the present embodiment is described with reference to Fig. 1. The mobile communication system 1 is, for example, a system conforming to a technical specification (TS) of 3GPP. Hereinafter, description is made with an example in which the 5th generation system (5G system) of the 3GPP standard, that is, a mobile communication system based on a new radio (NR) access is used as the mobile communication system 1.

The mobile communication system 1 includes a network 10 and a user equipment (User Equipment: UE) 100 that communicates with the network 10. The network 10 includes NG-RAN (Next Generation Radio Access Network) 20, which is a 5G radio access network, and a 5GC (5G Core Network) 30, which is a 5G core network.

The UE 100 is a communication apparatus that performs communication via a base station 200. The UE 100 may be an apparatus used by a user. The UE 100 is, for example, a mobile apparatus such as a mobile phone terminal such as a smartphone, a tablet terminal, a notebook PC, a communication module, or a communication card. The UE 100 may be a vehicle (for example, a car, a train, or the like) or an apparatus (for example, a vehicle UE) provided in the vehicle. The UE 100 may be a transport body other than the vehicle (for example, a ship, an airplane, or the like) or an apparatus (for example, an aerial UE) provided in the transport body. The UE 100 may be a sensor or an apparatus provided in the sensor. Note that the UE 100 may be referred to as another term such as a terminal, a terminal apparatus, a mobile station, a mobile terminal, a mobile apparatus, a mobile unit, a subscriber station, a subscriber terminal, a subscriber apparatus, a subscriber unit, a wireless station, a wireless terminal, a wireless apparatus, a wireless unit, a remote station, a remote terminal, a remote apparatus, or a remote unit. In addition, the UE 100 is an example of a terminal, and the terminal may include a factory apparatus or the like.

The NG-RAN 20 includes a plurality of base stations 200. Each base station 200 manages at least one cell. One or a plurality of base stations 200 correspond to one or a plurality of cells. The base station 200 may be replaced with the cell, and the cell may be replaced with the base station 200. The cell configures a minimum unit of a communication area. One cell belongs to one frequency (carrier frequency). The term "cell" may indicate a radio communication resource and may also indicate a communication object of the UE 100. Each base station 200 can perform radio communication with the UE 100 existing in its own cell. The base station 200 communicates with the UE 100 using a protocol stack of RAN. Details of the protocol stack are described below. Also, the base station 200 is connected to another base station 200 (may be referred to as a neighboring base station) via an Xn interface. The base station 200 communicates with the neighboring base station via the Xn interface. Also, the base station 200 provides NR user plane and control plane protocol terminations toward the UE 100 and is connected to the 5GC 30 via an NG interface. Such a base station 200 of NR may be referred to as a gNodeB (gNB).

The 5GC 30 includes a core network apparatus 300. The core network apparatus 300 includes, for example, an access and mobility management function (AMF) and/or a user plane function (UPF). The AMF performs mobility management of the UE 100. The UPF provides a feature specialized for U-plane processing. The AMF and the UPF are connected to the base station 200 via the NG interface.

### (Configuration Example of Protocol Stack)

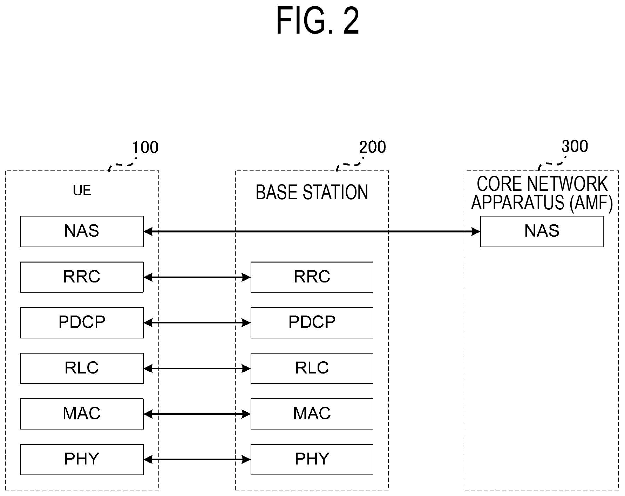

Next, a configuration example of the protocol stack according to the present embodiment will be described with reference to Fig. 2.

A protocol of a radio section between the UE 100 and the base station 200 includes a physical (PHY) layer, a medium access control (MAC) layer, a radio link control (RLC) layer, a packet data convergence protocol (PDCP) layer, and a radio resource control (RRC) layer.

The PHY layer performs encoding and decoding, modulation and demodulation, antenna mapping and demapping, and resource mapping and demapping. Data and control information are transmitted between the PHY layer of the UE 100 and the PHY layer of the base station 200 via a physical channel.

The MAC layer performs data priority control, retransmission processing by hybrid ARQ (HARQ), a random access procedure, and the like. Data and control information are transmitted between the MAC layer of the UE 100 and the MAC layer of the base station 200 via a transport channel. The MAC layer of the base station 200 includes a scheduler. The scheduler determines uplink and downlink transport formats (transport block size and modulation and coding scheme (MCS)) and resources to be allocated to the UE 100.

The RLC layer transmits data to the RLC layer on a reception side by using the features of the MAC layer and the PHY layer. Data and control information are transmitted between the RLC layer of the UE 100 and the RLC layer of the base station 200 via a logical channel.

The PDCP layer performs header compression/decompression and encryption/decryption.

A service data adaptation protocol (SDAP) layer may be provided as an upper layer of the PDCP layer. The service data adaptation protocol (SDAP) layer performs mapping between an IP flow which is a unit in which a core network performs quality of service (QoS) control, and a radio bearer which is a unit in which an access stratum (AS) performs QoS control.

The RRC layer controls a logical channel, a transport channel, and a physical channel according to establishment, reestablishment, and release of the radio bearer. RRC signaling for various configurations is transmitted between the RRC layer of the UE 100 and the RRC layer of the base station 200. In a case where an RRC connection exists between the RRC of the UE 100 and the RRC of the base station 200, the UE 100 is in an RRC connected state. In a case where no RRC connection exists between the RRC of the UE 100 and the RRC of the base station 200, the UE 100 is in an RRC idle state. In a case where the RRC connection between the RRC of the UE 100 and the RRC of the base station 200 is suspended, the UE 100 is in an RRC inactive state.

A NAS layer located above the RRC layer in the UE 100 performs session management and mobility management of the UE 100. NAS signaling is transmitted between the NAS layer of the UE 100 and the NAS layer of the core network apparatus 300.

Note that the UE 100 includes an application layer or the like in addition to a protocol of a radio interface.

### (Radio Frame Configuration)

In the 5G system, downlink transmission and uplink transmission are configured in a radio frame of 10 ms duration. For example, the radio frame is expressed by a system frame number (SFN) of 0 to 1023. For example, the radio frame is configured with 10 subframes. For example, one subframe may be 1 ms. Also, one subframe may be configured with one or more slots. For example, the number of symbols configuring one slot is 14 for a normal cyclic prefix (CP) and 12 for an extended CP. Also, the number of slots configuring one subframe changes depending on a configured subcarrier spacing. For example, for the normal CP, in a case where the subcarrier spacing is configured as 15 kHz, the number of slots per subframe is one (that is, 14 symbols), in a case where the subcarrier spacing is configured as 30 kHz, the number of slots per subframe is two (that is, 28 symbols), in a case where the subcarrier spacing is configured as 60 kHz, the number of slots per subframe is four (that is, 56 symbols), and in a case where the subcarrier spacing is configured as 120 kHz, the number of slots per subframe is eight (that is, 112 symbols). In addition, for the extended CP, in a case where 60 kHz is configured as the subcarrier spacing, the number of slots per subframe is 4 (that is, 48 symbols). That is, the number of slots configuring one subframe is determined based on the subcarrier spacing configured by the base station 200. Also, the number of symbols configuring one subframe is determined based on the subcarrier spacing configured by the base station 200. That is, the number of symbols included in a subframe of 1 ms is determined based on the subcarrier spacing configured by the base station 200, and a length (a length in a time direction) of each symbol changes.

### (Determination of PRACH Transmission Occasion)

Determination of a PRACH transmission occasion will be described. For example, in a case where a random access (RA) procedure is performed, the UE 100 determines a PRACH occasion (also called a PRACH transmission occasion).

The UE 100 may perform the RA procedure in a case where the RA procedure is triggered by any of events, for example, (a) an initial access from the RRC idle state, (b) an RRC connection re-establishment procedure, (c) arrival of downlink data or uplink data in the RRC connected state when an uplink synchronization status is "asynchronous", (d) arrival of uplink data when there is no usable physical uplink control channel (PUCCH) resource for a scheduling request (SR), (e) SR failure, (f) a request by RRC in a synchronization reconfiguration (for example, handover), (g) an RRC connection resume procedure from the RRC inactive state, (h) for establishing time adjustment of a secondary timing advance group (TAG), (i) a request for other system information (Other SI), (j) a beam failure recovery, (k) a consistent uplink listen-before-talk (UL LBT) failure in a Spcell, (l) small data transmission (SDT) in the RRC inactive state, and (m) for positioning in the RRC connected state that requires the RA procedure (for example, when timing advance is required for UE positioning).

In the RA procedure, the UE 100 determines a resource (that is, a PRACH occasion) for PRACH transmission, for example, using a plurality of predefined random access configurations and random access (RA) parameters in a system information block type 1 (SIB1).

The random access (RA) configuration is defined by a table (RA configuration table) indicating association between an allocation configuration of a PRACH preamble format and a time domain of a PRACH occasion, and a PRACH configuration index. The UE 100 stores the table in advance.

The RA parameter is designated, for example, by RACH configuration common information (for example, RACH-ConfigCommon or RACH-ConfigCommonTwoStepRA) used for designating the random access parameter. "RACH-ConfigCommon" may be information used for specifying cell specific random-access parameters. "RACH-ConfigCommonTwoStepRA" may be information used for specifying cell specific two-step random access type parameters.

The RACH configuration common information may include, for example, a PRACH configuration index (for example, prach-ConfigurationIndex or msgA-PRACH-ConfigurationIndex(-r16)) or information related to the number of PRACH transmission occasions (for example, msg1-FDM or msgA-RO-FDM(-r16)). "msg1-FDM" may indicate the number of PRACH transmission occasions frequency-division multiplexed (FDM) in a single instance. "msgA-RO-FDM" may indicate the number of msgA PRACH transmission occasions frequency-division multiplexed in a single instance. The PRACH configuration index indicates a PRACH occasion of a RA configuration to be used among a plurality of RA configurations defined in the RA configuration table in PRACH transmission. The UE 100 determines the PRACH occasion using the RA configuration indicated by the PRACH configuration index.

In addition, the UE 100 maps synchronization signal (SS) and physical broadcast channel (PBCH) block (SSB) index(es) (hereinafter, also referred to as SSB index(es)) to the PRACH occasion(s).

Using a parameter (for example, the number of SSBs associated with one PRACH occasion or the number of contention-based preambles per SSB in each valid PRACH occasion) provided by the RACH configuration common information (for example, ssb-perRACH-OccasionAndCB-PreamblesPerSSB in RACH-ConfigCommon and/or msgA-SSB-PerRACH-OccasionAndCB-PreamblesPerSSB in RACH-ConfigCommonTwoStepRA), the SSB index(es) is/are mapped to the valid PRACH occasion(s), for example, in the following order.

First, in increasing order of preamble indexes within a single PRACH occasion

Second, in increasing order of frequency resource indexes for frequency multiplexed PRACH occasions

Third, in increasing order of time resource indexes for time multiplexed PRACH occasions within a PRACH slot

Fourth, in increasing order of indexes for PRACH slots

In a case where the UE 100 performs the mapping, an association period is defined. The association period is a minimum value in a set determined by a PRACH configuration period. The association period initiates from frame 0. In the association period, a predetermined number of SSB indexes are mapped at least once to the PRACH occasion. The UE 100 acquires the predetermined number from information (for example, ssb-PositionsInBurst) in the SIB1 or in serving cell configuration common information (for example, ServingCellConfigCommon). In a set determined by the PRACH configuration period, the PRACH configuration period (ms) and the association period (the number of PRACH configuration periods) are associated in the table.

In a case where a set of PRACH occasions or PRACH preambles that are not mapped on the predetermined number of SSB indexes is present after an integer number of SSB indexes to the PRACH occasions mapping cycles within the association period, the SSB indexes are not mapped to the set of the PRACH occasions or the PRACH preambles.

An association pattern period includes one or more association periods. The association pattern period is determined such that a pattern between the PRACH occasion and the SSB index is repeated per 160 msec. The PRACH occasions that are not associated with the SSB indexes after an integer of association periods are not used for PRACH transmission.

### (SI Modification)

SI modification will be described.

In a case where the system information (a part thereof) is modified, the network 10 notifies the modification to the UE 100 first. In a certain modification period (hereinafter, also referred to as a first modification period), the network 10 may transmit a modification notification to the UE 100. The modification notification may be transmitted multiple times over the first modification period. In the next modification period (hereinafter, also referred to as a second modification period) to the first modification period, the network 10 transmits updated system information (that is, modified system information).

The summary of the operation of the UE 100 during the SI modification will be described in detail. The UE 100 receives DCI including a short message. The DCI may be DCI to which CRC (also referred to as a CRC parity bit) scrambled with a paging radio network temporary identifier (P-RNTI) is added. As a result, the UE 100 is instructed to modify (update) the system information from the next modification period (second modification period) to the first modification period where the DCI is received.

The modification period is determined based on a parameter (for example, modificationPeriodCoeff, defaultPagingCycle) in the SIB1 message. For example, the modification period (modification period m) is determined. The modification period is represented by the number of radio frames.

$modification period m = modificationPeriodCoeff ∗ defaultPagingCycle$
"modificationPeriodCoeff" indicates a value for calculating an actual modification period. "defaultPagingCycle" is a default paging cycle. The value of default paging cycle corresponds to the number of radio frames (for example, 32, 64, 128, 256). A boundary of the modification period is defined by a SFN value where SFN mod m = 0.

The UE 100 acquires new system information (that is, updated system information) from the initiation of the second modification period based on the reception of the modification notification in the first modification period. The UE 100 applies previously obtained system information until the new system information is acquired.

### (Assumed Scenario)

In the 3GPP which is a standardization project of a mobile communication system, network energy saving (NES) has been discussed. As one method of NES, dynamic adaptation of dynamically modifying a duration of a physical random access channel (PRACH) occasion (hereinafter, PRACH period) has been proposed.

In the dynamic adaptation of PRACH occasions, for example, by modifying a PRACH period using downlink control information (DCI), the PRACH period can be modified at a shorter time interval, for example, as compared to a case where a PRACH period is modified by updating a system information block. As a result, the energy of a network can be saved.

However, a specific operation related to dynamic adaptation of PRACH occasions is not defined. Accordingly, there is a concern that the UE 100 cannot appropriately perform dynamic adaptation of PRACH occasions. Therefore, an operation for enabling the dynamic adaptation of PRACH occasion to be appropriately performed is described below.

For example, there is a concern that the UE 100 may or may not perform the dynamic adaptation without knowing whether or not a (re)selected cell supports the dynamic adaptation. In addition, for example, even in a case where the UE 100 attempts to modify the PRACH period by DCI, a method of modifying the PRACH period cannot be determined (for example, a RA configuration to be used as a modified RA configuration cannot be determined). As a result, there is a concern that PRACH transmission and reception between the UE 100 and base station 200 (cell) may fail. Therefore, an operation for enabling the dynamic adaptation of PRACH occasion to be appropriately performed is described below.

In addition, in a case where a mechanism of modifying a period of a PRACH occasion by updating the system information (system information block) and a mechanism of modifying a period of a PRACH occasion by DCI are present together, both of the mechanisms may compete against each other. In this case, which mechanism should be used for the UE 100 to modify a period of a PRACH occasion is unclear, and there is a concern that an unexpected error may occur. Accordingly, in a case where the UE 100 performs PRACH transmission, which modification should be applied to the PRACH transmission cannot be appropriately determined, and there is a concern that the PRACH transmission and reception between the UE 100 and the base station 200 (cell) may fail. Therefore, an operation for enabling the dynamic adaptation of PRACH occasion to be appropriately performed is described below.

### (Configuration of User Equipment)

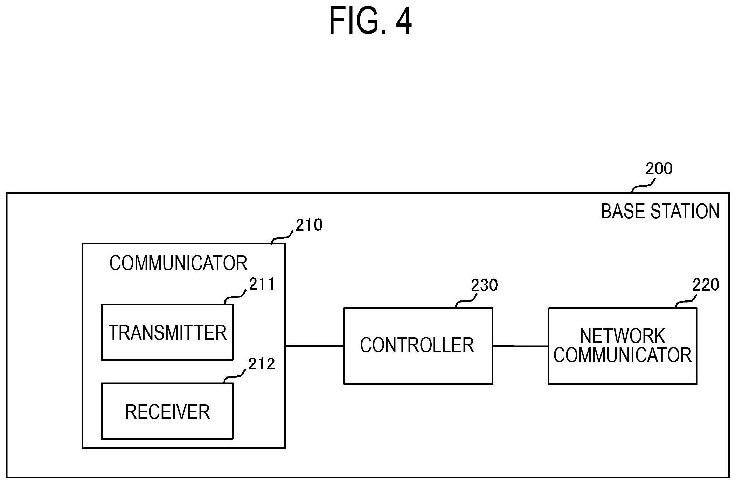

A configuration of the UE 100 according to the embodiment is described with reference to Fig. 4. The UE 100 includes a communicator 110 and a controller 120.

The communicator 110 performs radio communication with the base station 200 by transmitting and receiving a radio signal to and from the base station 200. The communicator 110 includes at least one transmitter 111 and at least one receiver 112. The transmitter 111 and the receiver 112 may be configured with a plurality of antennas and a radio frequency (RF) circuit. The antenna converts a signal into a radio wave and emits the radio wave into a space. Furthermore, the antenna receives a radio wave in a space and converts the radio wave into a signal. The RF circuit performs analog processing of a signal transmitted and received via the antenna. The RF circuit may include a high frequency filter, an amplifier, a modulator, a low pass filter, and the like.

The controller 120 performs various types of control in the UE 100. The controller 120 controls communication with the base station 200 via the communicator 110. The operation of the UE 100 described above and described below may be an operation controlled by the controller 120. The controller 120 may include at least one processor capable of executing a program and a memory that stores the program. The processor may execute the program and perform the operation of the controller 120. The controller 120 may include a digital signal processor that performs digital processing of a signal transmitted and received via the antenna and the RF circuit. The digital processing includes processing of the protocol stack of the RAN. Note that the memory stores the program to be executed by the processor, parameters related to the program, and data related to the program. The memory may include at least one of a read only memory (ROM), an erasable programmable read only memory (EPROM), an electrically erasable programmable read only memory (EEPROM), a random access memory (RAM), and a flash memory. The whole or part of the memory may be added to the processor.

In the UE 100 configured as described above, the receiver 112 receives, from the base station 200, both of updated system information that indicates a modification in a duration of a PRACH occasion and control information that indicates the modification in the duration of the PRACH occasion and is carried by signaling of a lower layer than an RRC layer. The controller 120 prioritizes one of the updated system information and the control information in accordance with priority information received from the base station 200 or a predefined rule and modifies the duration of the PRACH based on the prioritized information. As a result, in a case where the UE 100 performs PRACH transmission, modification to be applied to the PRACH transmission can be appropriately determined in accordance with the priority information received from the base station 200 or the predefined rule. The modification to be applied can be shared between the UE 100 and the base station 200 (cell), and failure in PRACH transmission and reception can be suppressed. As a result, the dynamic adaptation can be appropriately performed. The priority information is information for determining whether to prioritize the updated system information or the control information. In addition, the predefined rule is a rule for determining whether to prioritize the updated system information or the control information.

### (Configuration of Base Station)

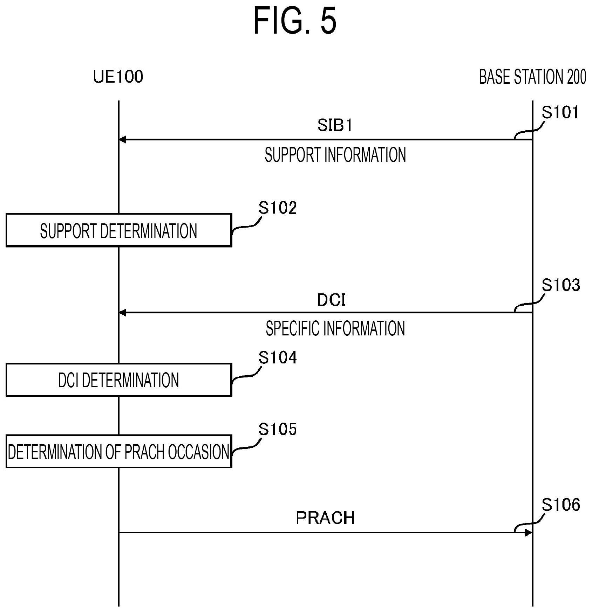

A configuration of the base station 200 according to the embodiment is described with reference to Fig. 5. The base station 200 includes a communicator 210, a network communicator 220, and a controller 230.

For example, the communicator 210 receives a radio signal from the UE 100 and transmits a radio signal to the UE 100. The communicator 210 includes at least one transmitter 211 and at least one receiver 212. The transmitter 211 and the receiver 212 may include an RF circuit. The RF circuit performs analog processing of a signal transmitted and received via the antenna. The RF circuit may include a high frequency filter, an amplifier, a modulator, a low pass filter, and the like.

The network communicator 220 transmits and receives a signal to and from the network. The network communicator 220 receives, for example, a signal from a neighboring base station connected via the Xn interface that is an interface between base stations and transmits a signal to the neighboring base station. Further, the network communicator 220 receives a signal from the core network apparatus 300 connected via the NG interface, for example, and transmits a signal to the core network apparatus 300.

The controller 230 performs various types of control in the base station 200. The controller 230 controls, for example, communication with the UE 100 via the communicator 210. Also, the controller 230 controls, for example, communication with a node (for example, the neighboring base station or the core network apparatus 300) via the network communicator 220. The operation of the base station 200 described above and described below may be an operation controlled by the controller 230. The controller 230 may include at least one processor capable of executing a program and a memory that stores the program. The processor may execute the program and perform the operation of the controller 230. The controller 230 may include a digital signal processor that performs digital processing of a signal transmitted and received via the antenna and the RF circuit. The digital processing includes processing of the protocol stack of the RAN. Note that the memory stores the program to be executed by the processor, parameters related to the program, and data related to the program. The whole or part of the memory may be added to the processor.

In the base station 200 configured as described above, the transmitter 211 transmits, to the UE 100, both of updated system information that indicates a modification in a duration of a PRACH occasion and control information that indicates the modification in the duration of the PRACH occasion and is carried by signaling of a lower layer than an RRC layer. The transmitter 211 transmits, to the UE 100, the priority information for causing the UE 100 to determine whether to prioritize the updated system information or the control information. As a result, in a case where the UE 100 performs PRACH transmission, modification to be applied to the PRACH transmission can be appropriately determined in accordance with the priority information received from the base station 200. The modification to be applied can be shared between the UE 100 and the base station 200 (cell), and failure in PRACH transmission and reception can be suppressed. As a result, the dynamic adaptation can be appropriately performed.

### (First Operation Example)

A first operation example will be described with reference to Figs. 5 to 9. An already provided description is omitted in some cases.

The UE 100 may be in the RRC idle state or the RRC inactive state with the cell managed by the base station 200. In addition, the UE 100 may be in the RRC connected state with the cell. The cell may be a cell on which the UE 100 is camping, or may be a cell that is (re)selected by the UE 100. The cell may be a cell where RRC connection is established by the UE 100. In the present operation example, the description proceeds assuming that the UE 100 is in the RRC idle state.

For the UE 100, the communication with the base station 200 may be communication with the cell. Accordingly, for the UE 100, the reception of the information/message or the like from the base station 200 may be reception of the information/message or the like from the cell, or the transmission of the information/message or the like to the base station 200 may be transmission of the information/message or the like to the cell.

### Step S101:

The transmitter 211 of the base station 200 transmits the system information block type 1 (SIB1) message to the UE 100. The transmitter 211 of the base station 200 transmits the SIB1 by broadcasting. The receiver 112 of the UE 100 receives the SIB1 message from the base station 200 (cell).

The SIB1 message includes related information when the UE 100 evaluates whether or not to permit access to the cell. The SIB1 message may include support information related to the support of the dynamic adaptation by the cell. The controller 230 of the base station 200 may control whether or not to include the support information in the SIB1 message based on whether the cell supports the dynamic adaptation.

The support information may indicate whether or not the cell supports the dynamic adaptation. In a case where the cell supports the dynamic adaptation, the support information may indicate that the cell supports the dynamic adaptation. On the other hand, in a case where the cell does not support the dynamic adaptation, the support information may indicate that the cell does not support the dynamic adaptation. In addition, the support information may indicate whether or not the cell supports the dynamic adaptation based on whether or not the support information is included in the SIB1 message.

The controller 230 of the base station 200 may control whether or not to include the support information in the SIB1 message based on whether the cell of the base station 200 supports the dynamic adaptation. For example, in a case where the cell supports the dynamic adaptation, the controller 230 of the base station 200 may (constantly) include the support information indicating that the cell supports the dynamic adaptation (for example, "true") in the SIB1 message. Alternatively, the controller 230 does not need to include the support information indicating that the cell does not support the dynamic adaptation in the SIB1 message. In this case, the controller 120 of the UE 100 may determine that the cell supports the dynamic adaptation by not including the support information in the SIB1 message.

In addition, in a case where the cell does not support the dynamic adaptation, the controller 230 of the base station 200 may (constantly) include the support information indicating that the cell does not support the dynamic adaptation (for example, "false") in the SIB1 message. Alternatively, the controller 230 does not need to include the support information indicating that the cell supports the dynamic adaptation to the SIB1 message. In this case, the controller 120 of the UE 100 may determine that the cell does not support the dynamic adaptation by not including the support information in the SIB1 message.

The support information may be information indicating whether the dynamic adaptation is valid (enabled) or invalid (disabled). The support information may be information indicating whether or not to permit the dynamic adaptation (performance thereof) in the cell.

Here, the dynamic adaptation will also be referred to as, for example, dynamic RACH adaptation. The dynamic adaptation may be, for example, at least any of the following operations (or definitions).
· The UE 100 switches the RA configuration by signaling of a lower layer than the RRC layer.
· The UE 100 supports a plurality of PRACH configurations.
· The UE 100 is configured using a plurality of PRACH configurations for one cell.
· The UE 100 is configured using a plurality of PRACH configurations for one bandwidth part (BWP).
· The UE 100 is configured using a plurality of PRACH configurations for one subcarrier spacing.
· The UE 100 is configured using a plurality of PRACH configurations for one component carrier.
· A modification in configuration and/or parameter for PRACH transmission.

The configuration and/or parameter for PRACH transmission may be, for example, at least one of a PRACH preamble index, a preamble subcarrier spacing (preamble SCS), a PRACH resource (time resource, frequency resource), and/or a duration (period) of a PRACH occasion.

The base station 200 may include configuration information related to the dynamic adaptation (hereinafter, referred to as DA configuration information) in the SIB1 message separately from the support information.

In addition, for example, in a case where the cell supports the dynamic adaptation, the transmitter 211 of the base station 200 may transmit a dedicated PDCCH configuration for monitoring PDCCH (or DCI) that triggers a modification in RA configuration to the UE 100. The receiver 112 of the UE 100 may receive the dedicated PDCCH configuration from the base station 200.

The controller 230 of the base station 200 may include the dedicated PDCCH configuration in, for example, the system information block (for example, SIBx). The base station 200 may include the dedicated PDCCH configuration in a dedicated RRC message. The dedicated PDCCH configuration may be information for establishing a search space (common search space) dedicated to the dynamic adaptation and/or CORESET.

In addition, in a case where the cell supports the dynamic adaptation, the transmitter 211 of the base station 200 may transmit, to the UE 100, the configuration information for configuring the UE 100 using the plurality of RA configurations for determining the PRACH occasion. The UE 100 receives the configuration information. The controller 230 of the UE 100 may control to configure the UE 100 with the plurality of RA configurations based on the configuration information.

The plurality of RA configurations may include (only) a general RA configuration instead of a dedicated RA configuration, may include (only) a dedicated RA configuration described below, or may include a combination of a general RA configuration and a dedicated RA configuration. The general RA configuration may be, for example, a configuration capable of configuring the UE 100 (also referred to as a legacy UE) that does not support dynamic adaptation (that is, that does not have capability of dynamic adaptation). The general RA configuration may be, for example, a RA configuration defined by a technical specification that is released before a released technical specification where the dynamic adaptation is supported.

### Step S102:

The controller 120 of the UE 100 performs support determination. Specifically, the controller 120 determines whether or not the cell supports the dynamic adaptation. The controller 120 may determine whether or not the cell supports the dynamic adaptation, for example, based on the support information as described above. The controller 120 may determine whether or not the cell supports the dynamic adaptation based on whether or not the SIB1 message includes the support information.

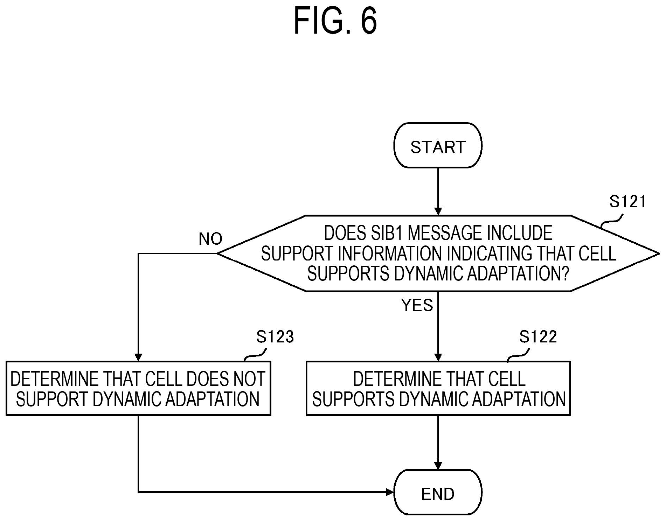

As illustrated in Fig. 6, for example, in Step S121, in a case where the SIB1 message includes the support information indicating the cell supports the dynamic adaptation, the controller 120 may perform the processing of Step S122. On the other hand, in a case where the SIB1 message does not include the support information indicating the cell supports the dynamic adaptation, the controller 120 may perform the processing of Step S123.

In Step S122, the controller 120 determines that the cell supports the dynamic adaptation. In a case where (it is determined that) the cell supports the dynamic adaptation, the controller 120 may perform the dynamic adaptation.

In Step S123, the controller 120 determines that the cell does not support the dynamic adaptation. In a case where (it is determined that) the cell does not support the dynamic adaptation, the controller 120 does not need to perform the dynamic adaptation.

### Step S103:

The transmitter 211 of the base station 200 transmits the signaling of the lower layer than the RRC layer to the UE 100. The receiver 112 of the UE 100 receives the signaling of the lower layer from the base station 200. The signaling of the lower layer may be DCI. The signaling of the lower layer may be PDCCH that carries DCI. The signaling of the lower layer may be signaling (for example, MAC CE) in the MAC layer. In the present operation example, the description proceeds assuming that the signaling of the lower layer is DCI.

In a case where the cell of the base station 200 supports the dynamic adaptation, the controller 230 of the base station 200 may transmit DCI (hereinafter, also referred to as specific DCI) including a specific field (or where a specific field is configured) for modifying the duration of the PRACH occasion. On the other hand, in a case where the cell of the base station 200 does not support the dynamic adaptation, the controller 230 may transmit DCI (hereinafter, also referred to as normal DCI) not including the specific field (or where a specific field is not configured).

The specific field may be a field for modifying the duration of the PRACH occasion. In addition, the specific field may be, for example, a field for modifying the random access configuration. The specific field may include specific information. The specific information may be information for modifying the duration of the PRACH occasion. In addition, the specific information may be information for modifying the random access configuration. Details of the specific information will be described below.

In a case where the UE 100 is configured using the dedicated PDCCH configuration, the transmitter 211 of the base station 200 may transmit the specific DCI in the search space dedicated to the dynamic adaptation and/or CORESET. The transmitter 211 may transmit the normal DCI in the search space configured using the normal PDCCH configuration and/or CORESET.

Specific DCI may be DCI to which CRC (also referred to as a CRC parity bit) scrambled with a predetermined radio network temporary identifier (RNTI) is included. The specific DCI may be information that triggers a modification in the RA configuration. PDCCH including the specific DCI will also be referred to as PDCCH accompanied by the predetermined RNTI, or may also be referred to as PDCCH addressed to the predetermined RNTI. The predetermined RNTI may be SI-RNTI, P-RNTI, RA-RNTI, and/or RNTI dedicated to the dynamic adaptation.

The UE 100 may be configured using the search space and CORESET for monitoring the specific DCI for one or each of a plurality of DL BWPs. In this case, the controller 120 of the UE 100 may control the dynamic adaptation (PRACH transmission based on the dynamic adaptation) to be performed on an uplink bandwidth part (UL BWP) corresponding to DL BWP that receives DCI.

### Step S104:

The controller 120 of the UE 100 may perform DCI determination. Specifically, the controller 120 may determine whether the received DCI is the normal DCI or the specific DCI. In a case where predetermined signaling of a lower layer than the RRC layer is received, the controller 120 may determine whether or not the specific field is included in the predetermined signaling.

In a case where the predetermined signaling (for example, DCI) is received from the cell, the controller 120 may determine whether or not the specific field is included in the received predetermined signaling (for example, DCI) based on the support information. In a case where the controller 120 determines that the cell supports the dynamic adaptation based on the support information, the controller 120 may determine that the specific field is included in the predetermined signaling. The controller 230 may determine that the received DCI is the specific DCI. On the other hand, in a case where the controller 120 determines that the cell does not support the dynamic adaptation based on the support information, the controller 120 may determine that the specific field is not included in the predetermined signaling. The controller 230 may determine that the received DCI is the normal DCI.

In addition, in a case where PDCCH is successfully decoded with the predetermined RNTI (for example, the RNTI dedicated to the dynamic adaptation), the controller 120 may determine that the DCI in (carried by) the PDCCH is the specific DCI.

In addition, in a case where the specific field information is received from the cell, the controller 120 may determine whether or not the specific field is included in the received predetermined signaling (for example, DCI) based on the specific field information.

The specific field information may be information indicating whether or not the specific field is included in the predetermined signaling (for example, DCI). The specific field information may indicate whether or not the specific field is included in the predetermined signaling (for example, DCI). In this case, the controller 120 determines that the specific field is included in the predetermined signaling (for example, DCI). Accordingly, the controller 120 may determine that the received DCI is the specific DCI. On the other hand, the specific field information may indicate that the specific field is not included in the predetermined signaling (for example, DCI). In this case, the controller 120 determines that the specific field is not included in the predetermined signaling (for example, DCI). Accordingly, the controller 120 may determine that the received DCI is the normal DCI.

The transmitter 211 of the base station 200 may transmit the specific field information to the UE 100. The transmitter 211 may include the specific field information in, for example, a radio resource control (RRC) message. The controller 230 of the base station 200 may include the specific field information in the radio resource control (RRC) message (for example, an RRC reconfiguration message) dedicated to the UE 100. The controller 230 may include the specific field information in the system information block (SIB) to be transmitted by broadcasting.

In a case where the dedicated PDCCH configuration is configured, the controller 120 of the UE 100 may determine that the DCI received in the search space dedicated to the dynamic adaptation and/or CORESET is the specific DCI. The controller 120 of the UE 100 may determine that the DCI received in the search space configured using the normal PDCCH configuration and/or CORESET is the normal DCI.

The controller 120 may perform the determination before receiving the DCI. The controller 120 may determine whether the received DCI is the normal DCI or the specific DCI based on the determination result. The controller 120 may perform the determination at a timing at which the support information is received. The controller 120 may perform the determination at a timing at which the specific field information is received.

In the present operation example, the description proceeds assuming that the UE 100 determines that the received DCI is the specific DCI.

### Step S105:

The controller 120 of the UE 100 determines the PRACH occasion. In addition, the controller 120 may identify the duration of the PRACH occasion. For example, in a case where the cell supports the dynamic adaptation, the controller 120 may perform at least any of the following methods.

In the first method, the controller 120 may modify the RA configuration used for determining the PRACH occasion based on the signaling (for example, DCI) of the lower layer. The controller 120 may identify a modified duration of the PRACH occasion based on the modified RA configuration. The controller 120 may identify a modified duration of the PRACH occasion based on specific information in the specific field.

The specific information may include an index (for example, PRACH config index) indicating the RA configuration related to the modified duration of the PRACH occasion. The controller 120 may modify the RA configuration to the RA configuration indicated by the index. In a case where the UE 100 is configured using a plurality of RA configurations, the controller 230 of the UE 100 may modify the RA configuration to the RA configuration indicated by the index among the plurality of configured RA configurations.

In addition, the specific information includes information designating a dedicated RA configuration including a configuration that is dedicated to the dynamic adaptation and related to the duration of the PRACH occasion. The information may indicate, for example, the dedicated RA configuration. The controller 120 may modify the RA configuration to the dedicated RA configuration indicated by the index. The controller 120 may identify a modified duration of the PRACH occasion based on the dedicated RA configuration.

The dedicated RA configuration is defined, for example, by a table (dedicated RA configuration table) indicating association between an allocation configuration of a PRACH preamble format and a time domain of a PRACH occasion, and a dedicated PRACH configuration index. The UE 100 stores the dedicated RA configuration table in advance. In a case where the dedicated RA configuration is indicated by the index, the UE 100 may determine the dedicated RA configuration based on the dedicated RA configuration table instead of the RA configuration table. In a case where the UE 100 is configured using a plurality of RA configurations, the controller 230 of the UE 100 may modify the RA configuration to the designated dedicated RA configuration among the plurality of configured RA configurations.

In a case where the UE 100 is configured using the plurality of RA configurations, the controller 120 of the UE 100 may determine the number of bits in the specific field based on the number of the plurality of RA configurations. For example, in a case where the UE 100 is configured using two or less RA configurations, the number of bits in the specific field may be 1. In a case where the UE 100 is configured using four or less RA configurations, the number of bits in the specific field may be 2. In a case where the UE 100 is configured using eight or less RA configurations, the number of bits in the specific field may be 3. The controller 120 may indicate one modified RA configuration using the specific information in the specific field indicated by one or a plural number of bits.

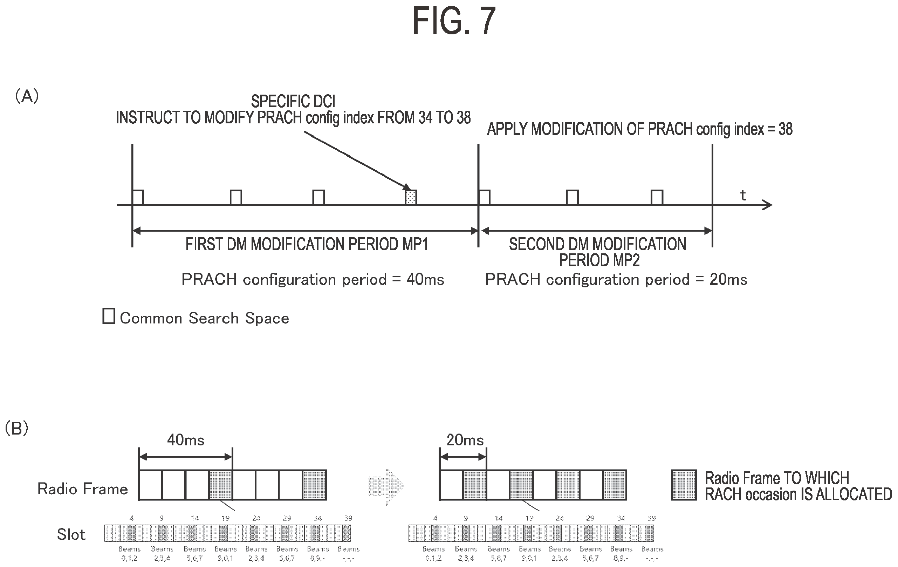

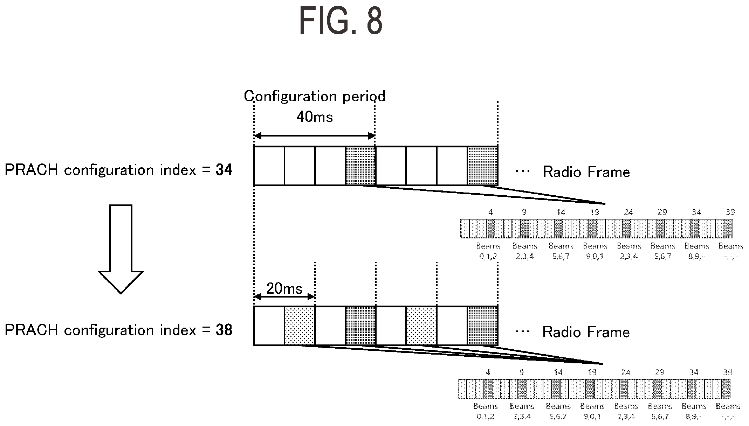

As illustrated in Figs. 7A, 7B, and 8, it is assumed that the controller 120 applies (or uses, configures) a RA configuration associated with, for example, a PRACH configuration index indicating 34. It is assumed that, in the RA configuration, the PRACH configuration period is 40 ms. The controller 120 determines a radio frame to which the PRACH occasion is allocated in the PRACH configuration period. The controller 120 determines a slot to which the PRACH occasion is allocated in the determined radio frame, and a symbol to which the PRACH occasion is allocated in the slot.

Next, for example, in a case where the specific information in the specific field of the received specific DCI indicates an index of 38, the controller 120 modifies (applies) the RA configuration to be applied to the RA configuration associated with the PRACH configuration index indicating 38. Accordingly, the specific DCI (the specific information therein) may be an instruction that the UE 100 modifies the PRACH configuration index to be applied from 34 to 38. It is assumed that, in the modified RA configuration, the PRACH configuration period is 20 ms. As described above, the controller 120 determines a radio frame to which the PRACH occasion is allocated, a slot to which the PRACH occasion is allocated, and a symbol to which the PRACH occasion is allocated.

In the second method, the controller 120 may identify the modified duration of the PRACH occasion based on a configuration value for adjusting the duration of the PRACH occasion.

Based on the configuration value, the controller 120 may calculate, for example, a duration of the PRACH occasion different from the duration of the PRACH occasion based on the already configured RA configuration. The controller 120 may identify the calculated duration of the PRACH occasion as the modified duration of the PRACH occasion. Based on the configuration value, the controller 120 may calculate a duration of the PRACH occasion different from the duration of the PRACH occasion based on the RA configuration (or the dedicated RA configuration) that is determined using the first method.

The configuration value may be a scaling factor for periodicity modification. The scaling factor may be a scaling factor that extends the periodicity of the RA configuration (or the dedicated RA configuration) as a baseline. The controller 230 of the base station 200 may include the configuration value in, for example, the specific DCI. The receiver 112 of the UE 100 may receive the configuration value from the base station 200.

The controller 120 of the UE 100 may determine a timing of modifying the RA configuration. That is, the controller 120 may determine a timing of applying the modified RA configuration. The controller 120 may determine a timing of modifying the duration of the PRACH occasion. The controller 120 may modify the RA configuration, for example, using at least any of the following methods.

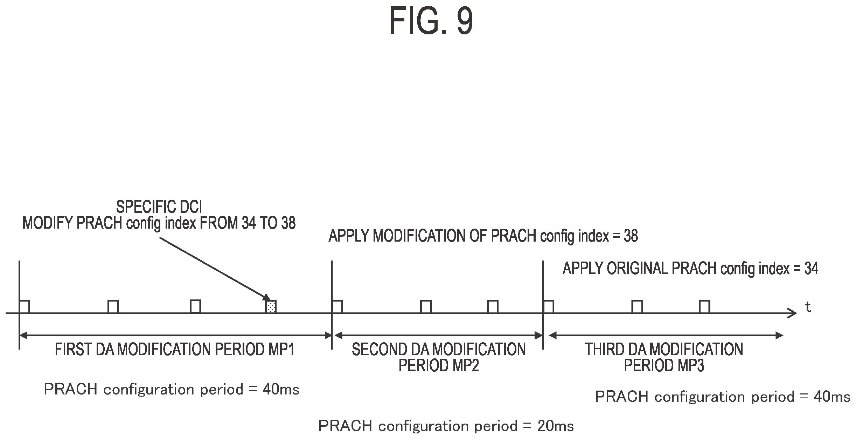

In the first method, the controller 120 may modify the RA configuration (may determine a timing of modifying the RA configuration) based on a modification period (hereinafter, also referred to as a DA modification period) related to the modification in the duration of the PRACH occasion based on the dynamic adaptation. For example, as illustrated in Figs. 7A and 9, for example, the DA modification period may be periodically repeated. The controller 120 may modify the RA configuration at a boundary between one DA modification period (for example, a first DA modification period MP1) and the next DA modification period (for example, a second DA modification period MP2) of the one DA modification period or after the boundary. In a case where the specific DCI is received in the first DA modification period MP1, the controller 120 may modify the RA configuration in the second DA modification period MP2. Accordingly, the controller 120 determines to modify the RA configuration in the second DA modification period MP2.

The DA modification period may be defined or configured based on the PRACH configuration period, the association period, and/or the association pattern period. The DA modification period may be, for example, an integer (natural number) multiple of the PRACH configuration period, the association period, and/or the association pattern period. The controller 120 may determine the DA modification period based on the PRACH configuration period, the association period, and/or the association pattern period. The second DA modification period MP2 may be defined or configured based on the PRACH configuration period, the association period, and/or the association pattern period in the modified RA configuration and/or dedicated RA configuration.

In the second method, the controller 120 may modify the RA configuration after a minimum duration has elapsed from the reception of the specific DCI. Accordingly, the controller 120 determines to modify the RA configuration after the minimum duration has elapsed from the reception of the specific DCI.

The minimum duration is a duration where a modification in the RA configuration by the UE 100 is not expected from the reception of the signaling (specific DCI) of the lower layer. The minimum duration may be defined, for example, based on a period of time required for the UE 100 to modify the RA configuration. In addition, the minimum duration may be defined, for example, based on the time (a system frame number, a subframe, a slot, and/or a symbol) when the signaling (specific DCI) of the lower layer is received, a cell specific scheduling offset (cellSpecificKoffset), UL BWP for PRACH transmission, and/or a SCS configuration (preamble SCS) for PRACH transmission. "cellSpecificKoffset" may be a scheduling offset used for a timing relationship modified for a non-terrestrial network (NTN).

In addition, the controller 120 may determine the valid PRACH occasion and/or the invalid PRACH occasion in the dynamic adaptation. The controller 120 may determine the valid PRACH occasion and/or the invalid PRACH occasion, for example, in accordance with predefined information (for example, a rule defined by a technical specification).

The valid PRACH occasion is a PRACH occasion where PRACH transmission is valid. The invalid PRACH occasion is a PRACH occasion where PRACH transmission is invalid. Accordingly, the UE 100 cannot transmit the PRACH in the invalid PRACH occasion. The UE 100 may perform PRACH transmission only in the valid PRACH occasion.

The receiver 112 of the UE 100 may receive information indicating the valid PRACH occasion and/or the invalid PRACH occasion from the base station 200. For example, the information may be included in the DA configuration information, may be included in the RRC message dedicated to the UE 100, or may be included in the specific information (that is, the specific field).

In addition, the controller 120 may determine the valid PRACH occasion and/or the invalid PRACH occasion based on the information. The information may designate the valid PRACH occasion and/or the invalid PRACH occasion. The information may include, for example, a PRACH mask index. The controller 120 may determine the PRACH occasion indicated by the index as the invalid PRACH occasion.

In addition, among one or more PRACH occasions that are determined by modifying the duration of the PRACH occasion, the controller 120 may determine, as the invalid PRACH occasion, a PRACH occasion at the same timing as a PRACH occasion that is determined based on a duration of an unmodified PRACH occasion. Accordingly, among one or more PRACH occasions that are determined by modifying the duration of the PRACH occasion, the controller 120 may determine, as the valid PRACH occasion, a PRACH occasion at a different timing from a PRACH occasion that is determined based on a duration of an unmodified PRACH occasion. The controller 120 may determine whether or not the PRACH occasion at the same timing is the valid PRACH occasion or the invalid PRACH occasion based on the information indicating the valid PRACH occasion and/or the invalid PRACH occasion.

As illustrated in Fig. 8, in the unmodified RA configuration, a fourth radio frame is determined as the radio frame to which the PRACH occasion is allocated. Next, in the modified RA configuration, the controller 120 determines second and fourth radio frames as the radio frames to which the PRACH occasion is allocated. In this case, since the PRACH occasion is allocated to the fourth radio frame in the unmodified and modified the RA configurations, the controller 120 determines the PRACH occasion allocated to the fourth radio frame as the invalid PRACH occasion. As a result, the fourth radio frame may be allocated as the PRACH occasion for the UE 100 in the related art and the UE 100 that does not perform the dynamic adaptation.

As described above, the controller 120 of the UE 100 may identify a modified duration of the PRACH occasion, for example, based on the modified RA configuration. The duration of the PRACH occasion may be, for example, any of the PRACH configuration period, the association period, and/or the association pattern period. The duration of the PRACH occasion may be the DA modification period.

In a case where the received DCI is the normal DCI, the controller 120 of the UE 100 may determine the PRACH occasion based on the already configured RA configuration. The controller 120 does not need to modify the duration of the PRACH occasion without modifying the RA configuration.

In addition, in a case where the RA configuration (or the duration of the PRACH occasion(s)) is modified, the controller 120 of the UE 100 may re-map the SSB(s) (SSB index(es)) to the PRACH occasion(s). The controller 120 of the UE 100 may map the SSB(s) (SSB index(es)) to the PRACH occasion(s) in consideration of the duration of the PRACH occasion(s), the PRACH configuration period, the association period, and/or the association pattern period.

The SSB may be CD-SSB (Cell-defining SSB) and/or NCD (Non-cell defining SSB). The UE 100 may constantly perform the dynamic adaptation based on the CD-SSB. For the controller 120 of the UE 100, information for configuring a subcarrier spacing for SSB in a serving cell and/or a downlink bandwidth part (DL BWP) may be included in the SIB or in the RRC message.

In addition, the information for configuring the subcarrier spacing for PRACH may be included in to RACH configuration information (for example, RACH-config common). The information may be included in to predetermined configuration information (for example, BWP-UplinkCommon) in the RACH configuration information. "BWP-UplinkCommon" may be information used for configuring a common parameter of the uplink BWP. The subcarrier spacing may be configured for each of one or a plurality of DL BWPs (for example, initial DL BWP and/or dedicated DL BWP) and one or a plurality of UL BWPs (for example, initial UL BWP and/or dedicated UL BWP).

In a case where the information for configuring the SSB is not included (absent) in the SIB (or the RRC message), the controller 120 of the UE 100 may perform the dynamic adaptation based on a SSB configuration predefined by a technical specification.

### Step S106:

The transmitter 111 of the UE 100 performs PRACH transmission in the determined PRACH occasion. The receiver 212 of the base station 200 receives PRACH from the UE 100.

Here, a validity duration may be configured using the modified RA configuration. For example, a case where the controller 120 of the UE 100 modifies the RA configuration from a first RA configuration to a second RA configuration will be described.

As illustrated in Fig. 9, in a case where the specific DCI is received in the first DA modification period MP1, the controller 120 applies the second RA configuration in the second DA modification period MP2. The controller 120 determines the PRACH occasion (the duration thereof) in accordance with the second RA configuration.

Next, the controller 120 applies the first RA configuration in a third DA modification period MP3. Accordingly, the controller 120 determines the PRACH occasion (the duration thereof) in accordance with the first RA configuration. That is, in a case where a predetermined validity duration has elapsed from the modification to the second RA configuration, the controller 120 modifies the RA configuration from the second RA configuration to the first RA configuration. The controller 120 performs a control of returning the unmodified RA configuration.

The validity duration may be defined or configured based on the PRACH configuration period, the association period, and/or the association pattern period. The validity duration may be, for example, an integer (natural number) multiple of the PRACH configuration period, the association period, and/or the association pattern period. The controller 120 may determine the validity duration based on the PRACH configuration period, the association period, and/or the association pattern period. In Fig. 9, the predetermined validity duration may be a one-fold (one-cycle) PRACH configuration period.

The receiver 112 of the UE 100 may receive information for designating the validity duration from the base station 200. For example, the information for designating the validity duration may be included in the DA configuration information, may be included in the RRC message dedicated to the UE 100, or may be included in the specific information (that is, the specific field).

In a case where the information for designating the validity duration is received, the controller 120 of the UE 100 may configure the validity duration. That is, the controller 120 may perform a control based on the validity duration. Alternatively, in a case where the information for designating the validity duration is received and in a case where instruction information for configuring the validity duration is received from the base station 200, the controller 120 may perform a control based on the validity duration. The instruction information may be included in, for example, the specific field.

In addition, a default value of the validity duration may be predefined. Alternatively, the information for designating the validity duration may include a default value different from a specific value indicating the validity duration. The controller 120 of the UE 100 may store the default value of the validity duration in advance. In a case where the information for designating the validity duration is not received, the controller 120 may configure the default value as the validity duration. Alternatively, in a case where the instruction information is not received, the controller 120 may configure the default value as the validity duration.

The controller 120 of the UE 100 controls a modification in the RA configuration (that is, the period of the PRACH occasion) based on the validity duration, but is not limited thereto. The UE 100 may modify the RA configuration (or may restore the RA configuration), for example, in response to a direct instruction from the base station 200.

The transmitter 211 of the base station 200 may transmit, to the UE 100, the signaling (for example, DCI) of the lower layer that instructs the UE 100 to modify (return) the RA configuration to a default RA configuration. The controller 120 of the UE 100 may modify the RA configuration to the default RA configuration based on the received signaling (for example, DCI). The DCI may be the specific DCI. For example, the information that instructs the UE 100 to return the RA configuration to the default RA configuration may be included in the specific field of the specific DCI. The controller 120 may modify the RA configuration to the default RA configuration based on the information. In addition, the DCI may be the normal DCI. The controller 120 may modify the RA configuration to the default RA configuration based on the reception of the normal DCI.

The default RA configuration may be, for example, the general RA configuration. Accordingly, the default RA configuration may be included in the SIB1 message. Alternatively, the default RA configuration may be a dedicated default RA configuration. In addition, the default RA configuration may be predefined, for example, by a technical specification. The controller 120 may store the default RA configuration. In a case where the UE 100 is not configured using the default RA configuration from the base station 200, the controller 120 may modify the RA configuration to the predefined default RA configuration.

As described above, the transmitter 211 of the base station 200 transmits the SIB1 message to the UE 100. The controller 230 controls whether or not to include support information indicating whether or not the cell supports dynamic adaptation to the SIB1 message based on whether or not the cell supports the dynamic adaptation of modifying a duration of a PRACH occasion by signaling of a lower layer than an RRC layer. The receiver 112 of the UE 100 receives a SIB1 message including related information from a cell when the UE 100 evaluates whether or not to permit access to the cell. The controller 120 controls dynamic adaptation of modifying a duration of a PRACH occasion by signaling of a lower layer than an RRC layer. In a case where support information indicating that the cell supports the dynamic adaptation is included in the SIB1 message, the controller 120 determines that the cell supports the dynamic adaptation based on the support information. As a result, the UE 100 can determine that the cell supports the dynamic adaptation. As a result, the UE 100 can appropriately perform the dynamic adaptation in the cell that supports the dynamic adaptation.

In addition, in a case where the cell supports the dynamic adaptation, the controller 120 may modify the RA configuration used for determining the PRACH occasion based on the signaling of the lower layer. The controller 120 may identify a modified PRACH occasion based on the modified RA configuration. As a result, the base station 200 can modify the RA configuration to modify the duration of the PRACH occasion, and can appropriately control the dynamic adaptation.

In addition, the receiver 112 may receive DCI including a specific field for modifying the duration of the PRACH occasion as the signaling of the lower layer. The controller 120 may identify a modified duration of the PRACH occasion based on specific information in the specific field. As a result, the base station 200 can appropriately control the dynamic adaptation by the DCI.

The specific information may include an index indicating a RA configuration related to the modified duration of the PRACH occasion. The controller 120 may modify the RA configuration to the RA configuration indicated by the index. As a result, the UE 100 can understand the RA configuration to be modified by the dynamic adaptation. As a result, the UE 100 can appropriately control the dynamic adaptation.

In addition, the specific information includes information designating a dedicated RA configuration including a configuration that is dedicated to the dynamic adaptation and related to the duration of the PRACH occasion. The controller 120 may identify a modified duration of the PRACH occasion based on the dedicated RA configuration. As a result, the UE 100 can appropriately control the dynamic adaptation by using the dedicated RA configuration.

In addition, in a case where the cell supports the dynamic adaptation, the receiver 112 may receive a configuration value for adjusting the duration of the PRACH occasion by the signaling of the lower layer. The controller 120 may identify a modified duration of the PRACH occasion based on the configuration value. As a result, even if the UE 100 does not modify the RA configuration, the UE 100 can modify the duration of the PRACH occasion.

In addition, for example, in a case where the cell supports the dynamic adaptation, the receiver 112 may receive a dedicated PDCCH configuration for monitoring DCI that triggers a modification in RA configuration. The receiver 112 may receive the DCI as the signaling of the lower layer based on the dedicated PDCCH configuration. As a result, the UE 100 can determine that the received DCI is the specific DCI. The UE 100 can distinguish between the normal DCI and the specific DCI, and can appropriately control the dynamic adaptation.

In addition, a modification period related to the modification of the duration of the PRACH occasion based on the dynamic adaptation may be periodically repeated. The controller 120 may modify the RA configuration in the next modification period of the modification period where the signaling of the lower layer is received. As a result, in a case where a plurality of UE's 100 are configured using the dynamic adaptation, the base station 200 can modify the respective RA configurations of the UEs 100 instead of modifying the RA configuration at a timing dedicated to each of the UEs 100. As a result, a control load on the base station 200 can be reduced.

In addition, after a minimum duration that is a duration where a modification in the RA configuration by the UE 100 is not expected has elapsed from the reception of the signaling of the lower layer, the controller 120 may modify the RA configuration. Thus, the RA configuration cannot be immediately configured depending on the capability of the UE 100. As a result, by making the RA configuration to be applied vary between the UE 100 and the base station 200, failure of PRACH transmission and reception can be suppressed.

In addition, among one or more PRACH occasions that are determined by modifying the duration of the PRACH occasion, the controller 120 may determine, as a PRACH occasion where PRACH transmission is invalid, a PRACH occasion at the same timing as a PRACH occasion that is determined based on a duration of an unmodified PRACH occasion. As a result, the PRACH occasion in the UE 100 that performs the dynamic adaptation can be made to vary from the PRACH occasion in the UE 100 in the related art and the UE 100 that does not perform the dynamic adaptation. As a result, the UE 100 that performs PRACH transmission is not likely to concentrate on a specific PRACH occasion, an RACH load of the cell does not increase, and the PRACH success rate can be increased.

In addition, the controller 120 may modify the RA configuration from the first RA configuration to the second RA configuration. In a case where a predetermined validity duration has elapsed from the modification to the second RA configuration, the controller 120 may modify the RA configuration from the second RA configuration to the first RA configuration. As a result, in order to restore the RA configuration of the UE 100, the base station 200 can cause the UE 100 to restore the RA configuration without giving any instruction.

In addition, in a case where predetermined signaling of a lower layer than the RRC layer is received from the cell, the controller 120 may determine whether or not a specific field for modifying the duration of the PRACH occasion is included in the received predetermined signaling based on the support information. As a result, the UE 100 can determine whether or not the specific field is included based on the SIB1 message.

In addition, the receiver 112 may receive, from the cell, specific field information indicating whether or not a specific field for modifying the duration of the PRACH occasion is included in predetermined signaling of a lower layer than the RRC layer. In a case where the predetermined signaling (for example, DCI) is received from the cell, the controller 120 may determine whether or not the specific field is included in the received predetermined signaling based on the specific field information. As a result, even in a case where the cell of the base station 200 supports the dynamic adaptation, the UE 100 can control whether or not to include the specific field in the predetermined signaling based on the specific field information. The base station 200 can flexibly control the dynamic adaptation.

In addition, the receiver 112 may receive, from the cell, configuration information for configuring the UE 100 using a plurality of RA configurations for determining the PRACH occasion. The controller 120 may determine the number of bits in the specific field based on the number of the plurality of RA configurations that are determined by the configuration information. As a result, the UE 100 can understand the number of bits in the specific field by receiving the configuration information.

### (Second Operation Example)

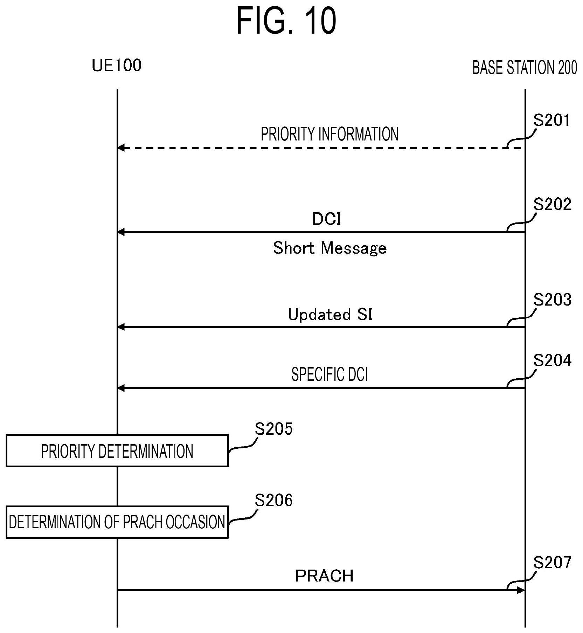

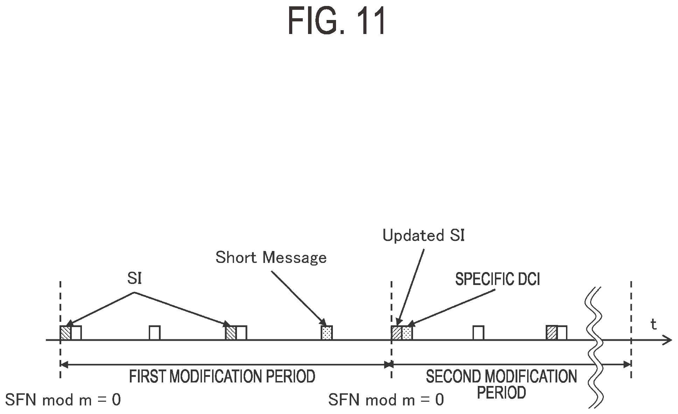

A second operation example will be described with reference to Figs. 10 and 11. An already provided description is omitted in some cases. In the present operation example, the UE 100 determines whether to prioritize the updated system information or the control information (specific DCI).

As illustrated in Fig. 11, the base station 200 transmits the system information (SI) to the UE 100 in a certain modification period (first modification period). The UE 100 applies, for example, information in the system information received from the base station 200 to perform communication with the base station 200 (cell thereof).

### Step S201:

The transmitter 211 of the base station 200 may transmit the priority information to the UE 100. The receiver 112 of the UE 100 may receive the priority information from the base station 200.

The priority information may be included in, for example, the system information. The priority information may be included in the SIB1 message. The priority information may also be included in the DA configuration information related to the dynamic adaptation. In addition, the priority information may be included in, for example, the RRC message dedicated to the UE 100.

The priority information may indicate whether or not to prioritize the updated system information over the control information that indicates the modification in the duration of the PRACH occasion and is carried by signaling of a lower layer than a radio resource control (RRC) layer. The control information may be, for example, the specific DCI. Hereinafter, the description proceeds assuming that the control information is the specific DCI.

The priority information may indicate that, for example, the updated system information is prioritized over the specific DCI. The priority information may indicate that the updated system information is not prioritized over the specific DCI.

The indication that the updated system information is prioritized over the specific DCI may be performed based on whether or not the priority information is present in a field where the priority information can be set in the information received from the base station 200. The indication that the updated system information is not prioritized over the specific DCI may be performed based on whether or not the priority information is present in a field where the priority information can be set in the information received from the base station 200. The controller 120 may determine whether or not the updated system information is prioritized over the specific DCI based on whether or not the priority information is present in a field where the priority information can be set in the information received from the base station 200.

### Step S202:

The transmitter 211 of the base station 200 transmits the DCI including the short message to the UE 100 by PDCCH. The receiver 112 of the UE 100 receives the DCI from the base station 200 by PDCCH.

In a case where the system information (SI) is updated (modified), the controller 230 of the base station 200 may transmit the DCI to the UE 100. For example, in a case where the information in the system information block type 1 message is modified, the controller 230 may transmit the DCI to the UE 100.

The controller 120 of the UE 100 attempts to decode PDCCH, for example, using P-RNTI. In a case where the P-RNTI that is used to configure the UE 100 is the same as the P-RNTI by which the CRC added to the DCI transmitted from the base station 200 is scrambled, the UE 100 can decode PDCCH. As a result, the controller 120 can normally receive the DCI, that is, the short message.

In the next modification period (that is, the second modification period of Fig. 11) to the modification period (that is, the first modification period of Fig. 11) where the DCI is received, the controller 120 determines to attempt the acquisition of the updated system information based on the reception of the short message. The controller 120 of the UE 100 attempts the acquisition of the updated system information in and after a boundary between the first modification period and the second modification period.

### Step S203:

The transmitter 211 of the base station 200 transmits the updated system information. The receiver 112 of the UE 100 receives the updated system information from the base station 200. The updated system information may indicate a modification in the duration of the PRACH occasion.

### Step S204:

The transmitter 211 of the base station 200 transmits the specific DCI. The receiver 112 of the UE 100 receives the specific DCI from the base station 200.

The specific DCI may include the priority information. The controller 120 may prioritize the priority information in the specific DCI over the priority information in another message and/or the predefined rule.

The controller 120 of the UE 100 receives the updated system information and the specific DCI from the base station 200, and thus may perform the process of Step S205.

The controller 120 may perform the processing of Step S205 in at least one of the following cases.
· A case where a timing at which the specific DCI is received is the same as a timing at which the DCI including the short message is received or is within a predetermined time from the timing.
· A case where a timing at which the specific DCI is received is the same as a timing of a boundary of the modification period where the specific DCI is received (that is, the end of the modification period) or is within a predetermined time from the timing.

· A case where a timing at which the specific DCI is received is the same as a timing at which the updated system information is acquired or is within a predetermined time from the timing.
·A case where a timing at which the specific DCI is received is the same as a timing at which the period of the PRACH occasion is modified based on the updated system information (for example, the modified RA configuration is applied), or is within a predetermined time from the timing.
· A case where a timing at which the period of the PRACH occasion is modified based on the specific DCI (for example, the modified RA configuration is applied) (hereinafter, also referred to as the modification timing based on the specific DCI) is the same as a timing at which the DCI including the short message is received, or is within a predetermined time from the timing.
· A case where the modification timing based on the specific DCI is the same as a timing of a boundary of the modification period where the specific DCI is received (that is, the end of the modification period) or is within a predetermined time from the timing.
· A case where the modification timing based on the specific DCI is the same as a timing at which the updated system information is acquired or is within a predetermined time from the timing.
·A case where the modification timing based on the specific DCI is the same as a timing at which the period of the PRACH occasion is modified based on the updated system information (for example, the modified RA configuration is applied), or is within a predetermined time from the timing.

The receiver 112 of the UE 100 may receive information indicating a value of the predetermined time from the base station 200. The controller 120 of the UE 100 may determine whether or not to perform the processing of Step S205 based on a timer set to the value of the predetermined time that is based on the information.

The controller 120 may ignore the specific DCI in at least one of the following cases. Here, the controller 120 may skip the processing of Step S205.
· A case where a timing at which the specific DCI is received is later than a boundary where transmission of the updated system information initiates (hereinafter, also referred to as the boundary of the modification period).
· A case where the modification timing based on the specific DCI is later than the boundary of the modification period.

In a case where the specific DCI is ignored, the controller 120 applies a configuration based on the acquired updated system information.

In addition, in a case where the specific DCI is ignored, the controller 120 may ignore the specific information in a specific field of the specific DCI. The controller 120 may perform a control based on information other than the specific field in the specific DCI.

### Step S205:

The controller 120 performs priority determination. Specifically, the controller 120 determines whether to prioritize the updated system information or the control information (that is, the specific DCI). The controller 120 may perform the determination based on at least any of the following methods.

In a first method, the controller 120 determines whether to prioritize the updated system information or the specific DCI in accordance with the predefined rule.

The controller 120 stores the predefined rule. The predefined rule may be, for example, a rule described in a 3GPP technical specification. The predefined rule may be, for example, a rule of prioritizing the updated system information over the specific DCI or a rule of not prioritizing the updated system information over the specific DCI.

In a case where it is defined that the updated system information is prioritized over the specific DCI, the controller 120 determines to prioritize the updated system information over the specific DCI. On the other hand, in a case where it is defined that the updated system information is not prioritized over the specific DCI, the controller 120 determines to prioritize the specific DCI over the updated system information.

In a case where the priority information is not received from the base station 200, the controller 120 may perform the priority determination based on the first method. In a case where the priority information is received from the base station 200, the controller 120 may perform the priority determination based on the following second method. Accordingly, the controller 120 may prioritize the determination result of the second method over the determination result of the first method.

In the second method, the controller 120 determines whether to prioritize the updated system information or the specific DCI in accordance with the priority information.

In a case where the priority information indicates that the updated system information is prioritized over the specific DCI, the controller 120 determines to prioritize the updated system information over the specific DCI. On the other hand, in a case where the priority information indicates that the updated system information is not prioritized over the specific DCI, the controller 120 determines to prioritize the specific DCI over the updated system information.

In addition, in a case where the indication that the updated system information is prioritized over the specific DCI is performed based on whether or not the priority information is present in a field where the priority information can be set in the information received from the base station 200, the controller 120 determines to prioritize the updated system information over the specific DCI. On the other hand, in a case where the indication that the updated system information is not prioritized over the specific DCI is performed based on whether or not the priority information is present in a field where the priority information can be set in the information received from the base station 200, the controller 120 determines to prioritize the specific DCI over the updated system information.

In a third method, the controller 120 determines whether to prioritize the updated system information or the specific DCI based on the timing at which the specific DCI is received. For example, the controller 120 may perform the following determination.
(a1) In a case where the specific DCI is received before receiving the DCI including the short message, the controller 120 may determine to prioritize the specific DCI.
(b1) In a case where the specific DCI is received before reaching the boundary of the modification period where the DCI is received and after receiving the DCI including the short message, the controller 120 may determine to prioritize the specific DCI.
(c1) In a case where the specific DCI is received before acquiring the updated system information and after reaching the boundary of the modification period where the DCI including the short message is received, the controller 120 may determine to prioritize the specific DCI.
(d1) In a case where the specific DCI is received after acquiring the updated system information, the controller 120 may determine to prioritize the updated system information.
(e1) In a case where the specific DCI is received after a given duration has elapsed from the acquisition of the updated system information, the controller 120 may determine to prioritize the specific DCI. The receiver 112 of the UE 100 may receive information indicating a value of the given duration from the base station 200. The controller 120 of the UE 100 may determine whether or not to perform the processing of Step S205 based on a timer set to the value of the given duration that is based on the information.

In a case where the determination of (a1) to (c1) is performed, the controller 120 may apply the RA configuration based on the specific DCI, for example, until the updated system information is acquired. In a case where the updated system information is acquired, the controller 120 may apply the RA configuration based on the updated system information.

In a case where the priority information is not received from the base station 200, the controller 120 may perform the priority determination based on the third method. The controller 120 may prioritize the determination result of the second method over the determination result of the third method.

In a fourth method, the controller 120 determines whether to prioritize the updated system information or the specific DCI based on the timing (the modification timing based on the specific DCI) at which the period of the PRACH occasion is modified based on the specific DCI (for example, the modified RA configuration is applied). For example, the controller 120 may perform the following determination.
(a2) In a case where the modification timing based on the specific DCI is reached before receiving the DCI including the short message, the controller 120 may determine to prioritize the specific DCI.
(b2) In a case where the modification timing based on the specific DCI is reached before reaching the boundary of the modification period where the DCI is received and after receiving the DCI including the short message, the controller 120 may determine to prioritize the specific DCI.
(c2) In a case where the modification timing based on the specific DCI is reached before acquiring the updated system information and after reaching the boundary of the modification period where the DCI including the short message is received, the controller 120 may determine to prioritize the specific DCI. Alternatively, in a case where the modification timing based on the specific DCI is reached before acquiring the updated system information and after reaching the boundary of the modification period where the DCI including the short message is received, the controller 120 may determine to prioritize the updated system information.
(d2) In a case where the modification timing based on the specific DCI is reached after acquiring the updated system information, the controller 120 may determine to prioritize the updated system information.
(e2) In a case where the modification timing based on the specific DCI is reached after a given duration has elapsed from the acquisition of the updated system information, the controller 120 may determine to prioritize the specific DCI. The receiver 112 of the UE 100 may receive information indicating the given duration from the base station 200.

In a case where the determination of (a2) to (c2) is performed, the controller 120 may apply the RA configuration based on the specific DCI, for example, until the updated system information is acquired. In a case where the updated system information is acquired, the controller 120 may apply the RA configuration based on the updated system information.

In a case where the priority information is not received from the base station 200, the controller 120 may perform the priority determination based on the fourth method. The controller 120 may prioritize the determination result of the second method over the determination result of the fourth method.

In a fifth method, the controller 120 determines whether to prioritize the updated system information or the specific DCI based on the content of the updated system information. Specifically, the controller 120 may determine to prioritize which information based on whether or not information for configuring the duration of the PRACH occasion is updated.

For example, in a case where the information for configuring the duration of the PRACH occasion is updated, that is, in a case where the updated system information indicates a modification of the duration of the PRACH occasion configured for the UE 100, the controller 120 may determine to prioritize the updated system information. For example, in a case where the RA configuration designated (indicated) by the updated system information is different from the RA configuration that is already configured for the UE 100, the controller 120 may determine to prioritize the updated system information.

On the other hand, for example, in a case where the information for configuring the duration of the PRACH occasion is not updated, that is, in a case where the updated system information does not indicate a modification of the duration of the PRACH occasion configured for the UE 100, the controller 120 may determine to prioritize the specific DCI.

Even in a case where the controller 120 determines to prioritize the specific DCI, the controller 120 applies the content of the updated system information other than information for modifying the duration of the PRACH occasion.

### Step S206:

The controller 120 determines the PRACH occasion based on the prioritized information. As a result, the controller 120 can modify the duration of the PRACH occasion.

In a case where the updated system information is prioritized, the controller 120 determines the PRACH occasion based on the updated system information. The controller 120 modifies the RA configuration to, for example, the RA configuration in the updated system information. The controller 120 determines the PRACH occasion based on the modified RA configuration. As a result, the controller 120 modifies the period of the PRACH occasion.

On the other hand, in a case where the specific DCI is prioritized, the controller 120 determines the PRACH occasion based on the specific DCI. The controller 120 may determine the PRACH occasion and the period of the PRACH occasion as in the first operation example. As a result, the controller 120 modifies the period of the PRACH occasion.

### Step S207:

As in Step S106, the transmitter 111 of the UE 100 performs PRACH transmission in the determined PRACH occasion. The receiver 212 of the base station 200 receives PRACH from the UE 100.

As described above, the receiver 112 of the UE 100 receives, from the base station 200, both of updated system information that indicates a modification in a duration of a PRACH occasion and control information (that is, specific DCI) that indicates the modification in the duration of the PRACH occasion and is carried by signaling of a lower layer than an RRC layer. The controller 120 prioritizes one of the updated system information and the specific DCI in accordance with priority information received from the base station 200 or a predefined rule and modifies the duration of the PRACH based on the prioritized information. As a result, in a case where the UE 100 performs PRACH transmission, modification to be applied to the PRACH transmission can be appropriately determined in accordance with the priority information received from the base station 200 or the predefined rule. The modification to be applied can be shared between the UE 100 and the base station 200 (cell), and failure in PRACH transmission and reception can be suppressed. As a result, the dynamic adaptation can be appropriately performed.

In addition, the transmitter 211 of the base station 200 transmits, to the UE 100, both of updated system information that indicates a modification in a duration of a PRACH occasion and specific DCI that indicates the modification in the duration of the PRACH occasion and is carried by signaling of a lower layer than an RRC layer. The transmitter 211 transmits, to the UE 100, the priority information for causing the UE 100 to determine whether to prioritize the updated system information or the specific DCI. As a result, as described above, the modification to be applied can be shared between the UE 100 and the base station 200 (cell), and failure in PRACH transmission and reception can be suppressed.

The priority information may indicate that the updated system information is prioritized over the specific DCI. In general, the system information includes a basic configuration in communication with the base station 200. First, by prioritizing the updated system information, the occurrence of a defect can be suppressed in communication between the UE 100 and the base station 200.

In addition, the updated system information may include the priority information. As a result, even in a case where the UE 100 is not in the RRC connected state, the UE 100 can acquire the priority information.

In addition, the specific DCI may include the priority information. As a result, the specific DCI is carried by the signaling of the lower layer. Therefore, the priority information can be transmitted to the UE 100 more quickly as compared to an upper layer. As a result, the network 10 can flexibly control the priority determination of the UE 100.

In addition, the receiver 112 may receive an RRC message dedicated to the UE 100 from the base station 200. The dedicated RRC message may include the priority information. As a result, the network 10 can modify the content of the priority information for each UE 100. As a result, the network 10 can flexibly control the priority determination of the UE 100.

In addition, the controller 120 may prioritize the updated system information in accordance with the rule indicating that the updated system information is prioritized over the specific DCI. As a result, between the UE 100 and the base station 200, the UE 100 can perform the determination without signaling regarding the priority information, and radio resources can be saved.

In addition, in a case where a timing of modifying the duration of the PRACH occasion based on the specific DCI is later than a boundary where transmission of the updated system information initiates, the controller 120 may ignore the specific DCI. As a result, in a case where it is necessary to acquire the updated system information, the UE 100 can reliably apply the updated system information.

In addition, in a case where updated system information that does not indicate a modification of the duration of the PRACH occasion configured for the UE 100 is received, the controller modifies the duration of the PRACH based on the specific DCI. As a result, even in a case where the duration of the PRACH occasion is not modified by the system information, the network 10 can modify the duration of the PRACH occasion dedicated to the UE 100.

### (Other Embodiments)

In the above-described embodiment, the controller 120 of the UE 100 determines whether or not the cell supports the dynamic adaptation based on the support information, but is not limited thereto. The controller 120 may determine whether or not the cell supports the dynamic adaptation, for example, based on the DA configuration information. For example, in a case where the DA configuration information is included in system information (for example, the SIB1 message), the controller 120 may determine that the cell supports the dynamic adaptation. On the other hand, in a case where the DA configuration information is not included in the system information, the controller 120 may determine that the cell does not support the dynamic adaptation.

For example, in a case where the cell of the base station 200 supports the dynamic adaptation, the controller 230 of the base station 200 may include the DA configuration information in the system information. The transmitter 211 of the base station 200 may transmit the system information including the DA configuration information in the cell. On the other hand, in a case where the cell of the base station 200 does not support the dynamic adaptation, the controller 230 of the base station 200 does not need to include the DA configuration information in the system information. The transmitter 211 of the base station 200 may transmit the system information not including the DA configuration information in the cell.

In the above-described embodiment, the period of the PRACH occasion is modified by the dynamic adaptation, but is not limited thereto. For example, by modifying the RA configuration by the dynamic adaptation, another parameter related to PRACH transmission may be modified without modifying the period of the PRACH occasion. That is, the UE 100 may modify a parameter other than the period of the PRACH occasion by the signaling of the lower layer.

In the above-described embodiment, the case where the validity duration is configured for the modified RA configuration is described as the example, but is not limited thereto. The validity duration does not need to be configured. Irrespective of the validity duration (that is, irrespective of whether or not the validity duration is configured), the base station 200 may control the UE 100 to modify the period of the PRACH occasion or the RA configuration by the specific DCI. Irrespective of the validity duration (that is, irrespective of whether or not the validity duration is configured), the UE 100 may modify the period of the PRACH occasion or the RA configuration by the specific DCI received from the base station 200.

In the above-described embodiment, of course, the order of the steps may be modified. For example, the processing of Step S203 may be performed after Step S204.

In the above-described embodiment, "the modification" of the RA configuration or the duration of the PRACH occasion may be replaced with "update". "The duration" of the PRACH occasion will also be called "period".

In the above-described embodiment, the mobile communication system based on the NR is described as the example of the mobile communication system 1. However, the mobile communication system 1 is not limited to the example. The mobile communication system 1 may be a system conforming to a TS of LTE (Long Term Evolution) or another generation system (for example, sixth generation) of the 3GPP standard. The base station 200 may be an eNB that provides E-UTRA user plane and control plane protocol terminations toward the UE 100 in the LTE. The mobile communication system 1 may be a system conforming to a TS defined in a standard other than the 3GPP standard. The base station 200 may be an integrated access and backhaul (IAB) donor or an IAB node.

In the above-described embodiment, the mobile communication system based on the NR is described as the example of the mobile communication system 1. However, the mobile communication system 1 is not limited to the example. The mobile communication system 1 may be a system conforming to a TS of LTE or another generation system (for example, sixth generation) of the 3GPP standard. The base station 200 may be an eNB that provides E-UTRA user plane and control plane protocol terminations toward the UE 100 in the LTE. The mobile communication system 1 may be a system conforming to a TS defined in a standard other than the 3GPP standard.

The steps in the operation of the above-described embodiment are not necessarily executed in the chronological order according to the order described in the flowchart or the sequence diagram. For example, the steps in the operation may be performed in an order different from the order described in the flowchart or the sequence diagram or may be performed in parallel. Also, a part of the steps in the operation may be deleted, or additional steps may be added to the processing. Further, each operation flow described above is not limited to a case of being necessarily implemented separately and independently, and two or more operation flows can be implemented in combination. For example, a part of steps of one operation flow may be added to another operation flow, or a part of steps of one operation flow may be replaced with a part of steps of another operation flow.

A program for causing a computer to execute each of the processes executed by the UE 100 or the base station 200 may be provided. The program may be recorded in a computer-readable medium. The program can be installed in the computer using the computer-readable medium. Here, the computer-readable medium in which the program is recorded may be a non-transitory recording medium. The non-transitory recording medium is not particularly limited and may be, for example, a recording medium such as a compact disk read only memory (CD-ROM) or a digital versatile disc read only memory (DVD-ROM). Also, circuits that execute the processes executed by the UE 100 or the base station 200 may be integrated, and at least a part of the UE 100 or the base station 200 may be configured as a semiconductor integrated circuit (a chipset or a system on chip (SoC)).

In the above-described embodiment, the term "transmit" may mean performing processing of at least one layer in the protocol stack used for transmission or may mean physically transmitting a signal in a wireless or wired manner. Alternatively, the term "transmit" may mean a combination of executing the processing of at least one layer and physically transmitting the signal in a wireless or wired manner as described above. Similarly, the term "receive" may mean executing processing of at least one layer in a protocol stack used for reception or may mean physically receiving a signal in a wireless or wired manner. Alternatively, the term "receive" may mean a combination of executing the processing of at least one layer and physically receiving the signal in a wireless or wired manner as described above. Similarly, the term "obtain/acquire" may mean obtaining/acquiring information from stored information, may mean obtaining/acquiring information from information received from another node, or may mean obtaining/acquiring information by generating information. Similarly, the terms "based on" and "depending on/in response to" do not mean "based only on" or "depending only on/in response only to" unless explicitly stated otherwise. The term "based on" means both "based only on" and "at least partially based on". Similarly, the term "depending on/in response to" means both "depending only on/in response only to" and "at least partially depending on/at least partially in response to". Similarly, the terms "include" and "comprise" do not mean including only enumerated items but mean both of including only enumerated items and including more items in addition to the enumerated items. Similarly, in the present disclosure, the term "or" does not mean exclusive OR, and means OR. Further, any reference to elements using designations such as "first", "second", and the like used in the present disclosure does not generally limit the amount or the order of the elements. Such designations may be used in the present disclosure as a convenient method to distinguish between two or more elements. References to first and second elements do not mean that only two elements can be employed therein or that the first element should precede the second element in any form. In the present disclosure, for example, in a case where articles such as "a", "an", and "the" in English are added by translation, such articles cover the plural meaning unless the context clearly indicates otherwise.

Although the present disclosure has been described according to examples, it is understood that the present disclosure is not limited to the examples or structures. The present disclosure also includes various modified examples or modifications made within an equivalent range. Additionally, various combinations or modes, or other combinations or modes including only one element, more elements, or less elements also fall within the scope and spirit of the present disclosure.

### (Supplementary Notes)

Features related to the above-described embodiment are additionally described.

### (Supplementary Note 1)

A communication apparatus comprising:
a receiver configured to receive, from a base station, both of updated system information that indicates a modification in a duration of a physical random access channel (PRACH) occasion and control information that indicates the modification in the duration of the PRACH occasion and is carried by signaling of a lower layer than a radio resource control (RRC) layer; and
a controller configured to prioritize one of the updated system information and the control information in accordance with priority information received from the base station or a predefined rule and to modify the duration of the PRACH based on the prioritized information.

### (Supplementary Note 2)

The communication apparatus according to Supplementary Note 1, wherein
the priority information indicates that the updated system information is prioritized over the control information.

### (Supplementary Note 3)

The communication apparatus according to Supplementary Note 1 or 2, wherein
the updated system information includes the priority information.

### (Supplementary Note 4)

The communication apparatus according to any one of Supplementary Notes 1 to 3, wherein
the control information includes the priority information.

### (Supplementary Note 5)

The communication apparatus according to any one of Supplementary Notes 1 to 4, wherein
the receiver is configured to receive an RRC message dedicated to the communication apparatus from the base station, and
the dedicated RRC message includes the priority information.

### (Supplementary Note 6)

The communication apparatus according to any one of Supplementary Notes 1 to 5, wherein
the controller is configured to prioritize the updated system information in accordance with the rule indicating that the updated system information is prioritized over the control information.

### (Supplementary Note 7)

The communication apparatus according to any one of Supplementary Notes 1 to 6, wherein
in a case where a timing of modifying the duration of the PRACH occasion based on the control information is later than a boundary where transmission of the updated system information initiates, the controller is configured to ignore the control information.

### (Supplementary Note 8)

The communication apparatus according to any one of Supplementary Notes 1 to 7, wherein
in a case where updated system information that does not indicate the modification of the duration of the PRACH occasion configured for the communication apparatus is received, the controller is configured to modify the duration of the PRACH based on the control information.

### (Supplementary Note 9)

A base station comprising:
a transmitter configured to transmit, to a communication apparatus, both of updated system information that modifies a duration of a physical random access channel (PRACH) occasion and control information that modifies the duration of the PRACH occasion and is carried by signaling of a lower layer than a radio resource control (RRC) layer, wherein
the transmitter is configured to transmit, to the communication apparatus, priority information for causing the communication apparatus to determine whether to prioritize the updated system information or the control information.

### (Supplementary Note 10)

A communication method that is performed by a communication apparatus, the method comprising the steps of:
receiving, from a base station, both of updated system information that indicates a modification in a duration of a physical random access channel (PRACH) occasion and control information that indicates the modification in the duration of the PRACH occasion and is carried by signaling of a lower layer than a radio resource control (RRC) layer; and
prioritizing one of the updated system information and the control information in accordance with priority information received from the base station or a predefined rule and modifying the duration of the PRACH based on the prioritized information.

## Claims

1. A communication apparatus (100) comprising:
a receiver (112) configured to receive, from a base station (200), both of updated system information that indicates a modification in a duration of a physical random access channel (PRACH) occasion and control information that indicates the modification in the duration of the PRACH occasion and is carried by signaling of a lower layer than a radio resource control (RRC) layer; and
a controller (120) configured to prioritize one of the updated system information and the control information in accordance with priority information received from the base station or a predefined rule and to modify the duration of the PRACH based on the prioritized information.

2. The communication apparatus according to claim 1, wherein
the priority information indicates that the updated system information is prioritized over the control information.

3. The communication apparatus according to claim 1 or 2, wherein
the updated system information includes the priority information.

4. The communication apparatus according to claim 1 or 2, wherein
the control information includes the priority information.

5. The communication apparatus according to claim 1 or 2, wherein
the receiver is configured to receive an RRC message dedicated to the communication apparatus from the base station, and
the dedicated RRC message includes the priority information.

6. The communication apparatus according to claim 1, wherein
the controller is configured to prioritize the updated system information in accordance with the rule indicating that the updated system information is prioritized over the control information.

7. The communication apparatus according to claim 1 or 2, wherein
in a case where a timing of modifying the duration of the PRACH occasion based on the control information is later than a boundary where transmission of the updated system information initiates, the controller is configured to ignore the control information.

8. The communication apparatus according to claim 1 or 2, wherein
in a case where updated system information that does not indicate the modification of the duration of the PRACH occasion configured for the communication apparatus is received, the controller is configured to modify the duration of the PRACH based on the control information.

9. A base station (200) comprising:
a transmitter (211) configured to transmit, to a communication apparatus (100), both of updated system information that modifies a duration of a physical random access channel (PRACH) occasion and control information that modifies the duration of the PRACH occasion and is carried by signaling of a lower layer than a radio resource control (RRC) layer, wherein
the transmitter is configured to transmit, to the communication apparatus, priority information for causing the communication apparatus to determine whether to prioritize the updated system information or the control information.

10. A communication method that is performed by a communication apparatus (100), the method comprising the steps of:
receiving, from a base station (200), both of updated system information that indicates a modification in a duration of a physical random access channel (PRACH) occasion and control information that indicates the modification in the duration of the PRACH occasion and is carried by signaling of a lower layer than a radio resource control (RRC) layer; and
prioritizing one of the updated system information and the control information in accordance with priority information received from the base station or a predefined rule and modifying the duration of the PRACH based on the prioritized information.
